# FASCICULE DE BREVET EUROPEEN

(11) **EP 1 775 101 B1**
(45) Date de publication et mention de la délivrance du brevet: **29.04.2009**
(21) Numéro de dépôt: 06301048.2
(22) Date de dépôt: 13.10.2006
(51) Int. Cl.: B29C 63/10, B29C 53/58, H01B 13/26

(54) **Procédé de gainage d'un cable à l'aide d'un ruban en matière synthétique, moyens de conditionnement de ce ruban en attente d'utilisation pour le gainage d'un cable et ruban ainsi conditionné**
Ummantelungsverfahren eines Kabels mittels eines Kunststoffstreifens, Behandlungsmittel für diesen Streifen vor dessen Benutzung zur Ummantelung eines Kabels und entsprechend behandelter Streifen
Lining process of a cable with a plastic ribbon, conditioning means of this ribbon before its use for lining a cable and such ribbon being conditioned

(30) Priorité: 14.10.2005 FR 0510532
(43) Date de publication de la demande: 18.04.2007
(73) Titulaire: COMPAGNIE PLASTIC OMNIUM, 69007 Lyon (FR)
(72) Inventeur: Cade, David, 52200 Langres (FR)
(74) Mandataire: Remy, Vincent Noel Paul

(56) Documents cités:
- EP-A- 1 384 753
- US-A1- 2004 038 038

## Description

La présente invention concerne un procédé de gainage d'un câble à l'aide d'un ruban en matière synthétique, des moyens de conditionnement de ce ruban en attente d'utilisation pour le gainage d'un câble et un ruban ainsi conditionné.

On connaît déjà, dans l'état de la technique, notamment d'après FR 2 842 532 ou US-A-2004/038038, un procédé de gainage d'un câble, dans lequel un ruban en matière synthétique est enroulé autour du câble de façon à former une gaine.

Au sens de la présente invention, on appelle « ruban » un film de matière ayant une longueur très supérieure à sa largeur et une épaisseur relativement faible par rapport à ses longueur et largeur.

Habituellement, la matière synthétique constituant le ruban est obtenue à partir d'un mélange d'une poudre de matière plastique, telle que le PolyTetraFluoroEthylene (PTFE), et d'un lubrifiant. Cette matière synthétique est extrudée de manière à former le ruban.

Afin d'assurer une stabilité des propriétés du ruban au cours du temps, en vue de son stockage en attente de son utilisation pour un gainage, on élimine le lubrifiant contenu dans la matière synthétique, généralement par chauffage ou à l'aide d'un solvant.

L'élimination du lubrifiant est également effectuée afin de réduire le poids du ruban en vue de sa manutention. Par ailleurs, cette élimination permet d'éviter que le lubrifiant s'évapore lors du stockage du ruban, ce qui causerait une pollution de l'air à proximité du ruban stocké.

Enfin, on notera que le lubrifiant doit dans tout les cas être éliminé avant une cuisson du ruban nécessaire dans la formation de la gaine. En effet, dans le cas contraire, le lubrifiant pourrait libérer des gaz inflammables lors de cette cuisson.

Le ruban, dont le lubrifiant à été éliminé, est ensuite stocké en attente de son utilisation pour un gainage.

Lors du gainage, le ruban est enroulé autour du câble de manière à former une gaine isolante. Cette gaine isolante doit être continue le long du câble, c'est pourquoi on enroule le ruban autour du câble avec chevauchement des spires de manière à ne laisser aucune partie du câble à nu.

Cependant, ces chevauchements des spires forment, sur la surface extérieure de la gaine, des surépaisseurs qui nuisent à l'aspect esthétique général de cette gaine, dont on préfère qu'elle soit lisse.

L'invention a notamment pour but de remédier à cet inconvénient en fournissant un procédé de gainage d'un câble permettant d'obtenir une gaine lisse.

A cet effet, l'invention a pour objet un procédé de gainage d'un câble, dans lequel un ruban en matière synthétique est enroulé autour du câble avec chevauchement de spires de façon à former une gaine continue, caractérisé en ce qu'on utilise un ruban en une matière synthétique plastiquement déformable et en ce qu'après l'enroulement du ruban autour du câble, on fait passer le câble enrubanné dans une filière de manière à éliminer des surépaisseurs dues au chevauchement des spires.

On réalise ainsi un lissage de la gaine.

Ce lissage n'était pas possible dans l'état de la technique à cause du fait qu'un ruban sec n'est pas plastiquement déformable.

Au sens de la présente invention, l'expression « plastiquement déformable » désigne un matériau qui peut être facilement déformé à froid par écrasement dans la filière.

L'élimination des surépaisseurs revient sensiblement à écraser le ruban de manière à réduire son épaisseur de moitié. Un matériau « plastiquement déformable » au sens de l'invention est, de préférence, un matériau qui, une fois extrudé en ruban d'épaisseur comprise entre 25 et 600 µ*m,* et enrubanné autour du câble, peut être écrasé à froid sans se rompre pour réduire son épaisseur de moitié par endroits.

Afin que la matière synthétique du ruban soit plastiquement déformable, une possibilité consiste à ne pas éliminer le lubrifiant du ruban après extrusion de la matière synthétique. La suppression de cette étape d'élimination du lubrifiant va à l'encontre du préjugé selon lequel l'élimination du lubrifiant de la matière synthétique est indispensable avant le stockage du ruban en attente d'utilisation pour un gainage.

En effet, en emballant le ruban plastiquement déformable dans des moyens de conservation destinés à limiter l'évaporation du lubrifiant, ce ruban peut également garder des propriétés relativement stables.

On obtient ainsi, lors du gainage, une matière synthétique suffisamment plastiquement déformable pour permettre le lissage de la gaine.

Au sens de l'invention, on considère que le lubrifiant n'a pas été éliminé de la matière synthétique si le ruban emballé contient au moins 50%du lubrifiant présent lors de l'extrusion, de préférence 70%.

On notera comme avantage supplémentaire de l'invention qu'elle autorise un recouvrement des spires moins important lors de la formation de la gaine que dans l'état de la technique, c'est-à-dire un recouvrement inférieur à 20% de chaque spire alors que ce recouvrement était compris entre 30 et 50% de chaque spire dans l'état de la technique. En effet, le passage du câble enrubanné dans la filière écrase les surépaisseurs notamment dans la direction axiale, ce qui compense le recouvrement de spires moins important.

Le recouvrement des spires étant moins important, on utilise moins de matière synthétique pour former la gaine. Ainsi, on réduit le poids ainsi que le coût de cette gaine.

Un autre avantage de l'invention est que, la gaine ne comportant plus de surépaisseurs, sa résistance à l'abrasion câble-à-câble est augmentée.

Un procédé de gainage selon l'invention peut en outre comporter l'une ou plusieurs des caractéristiques suivantes :
- la matière synthétique plastiquement déformable est obtenue par mélange d'une poudre de matière plastique et d'un lubrifiant ;
- la poudre de matière plastique est de la poudre de PolyTetraFluoroEthylene (PTFE) ;
- le procédé comprend une étape de formation du ruban par extrusion de la matière synthétique plastiquement déformable ;
- le procédé comprend une étape de réduction de l'épaisseur du ruban par calandrage de ce ruban ;
- le procédé comprend une étape de conditionnement du ruban en attente de son utilisation pour son enroulement autour du câble, au cours de laquelle le ruban de matière synthétique plastiquement déformable est emballé dans des moyens de conservation destinés à limiter l'évaporation du lubrifiant ;
- le procédé comprend une étape d'évaporation du lubrifiant contenu par la matière synthétique, faisant suite à l'étape de passage du câble enrubanné dans la filière.

L'invention à également pour objet un ruban en matière synthétique pour le gainage d'un câble par la mise en oeuvre d'un procédé de gainage tel que défini précédemment, caractérisé en ce qu'il est en matière synthétique plastiquement déformable, et en ce qu'il est conditionné par des moyens de conditionnement comportant des moyens destinés à limiter l'évaporation d'un lubrifiant contenu par le ruban.

L'invention sera mieux comprise à la lecture de la description qui va suivre, donnée uniquement à titre d'exemple et faite en se référant aux dessins annexés dans lesquels :
- la figure 1 représente les étapes d'un procédé de gainage selon l'invention ;
- la figure 2 représente un système pour la mise en oeuvre du procédé de la figure 1 ;
- la figure 3 représente un câble enrubanné avant passage de ce câble enrubanné dans une filière ;
- la figure 4 représente le câble enrubanné de la figure 3 après passage de ce câble enrubanné dans la filière.

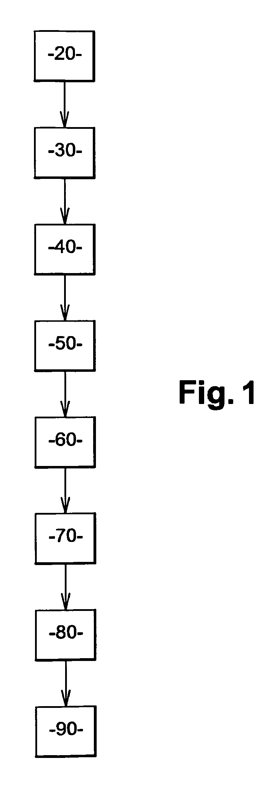

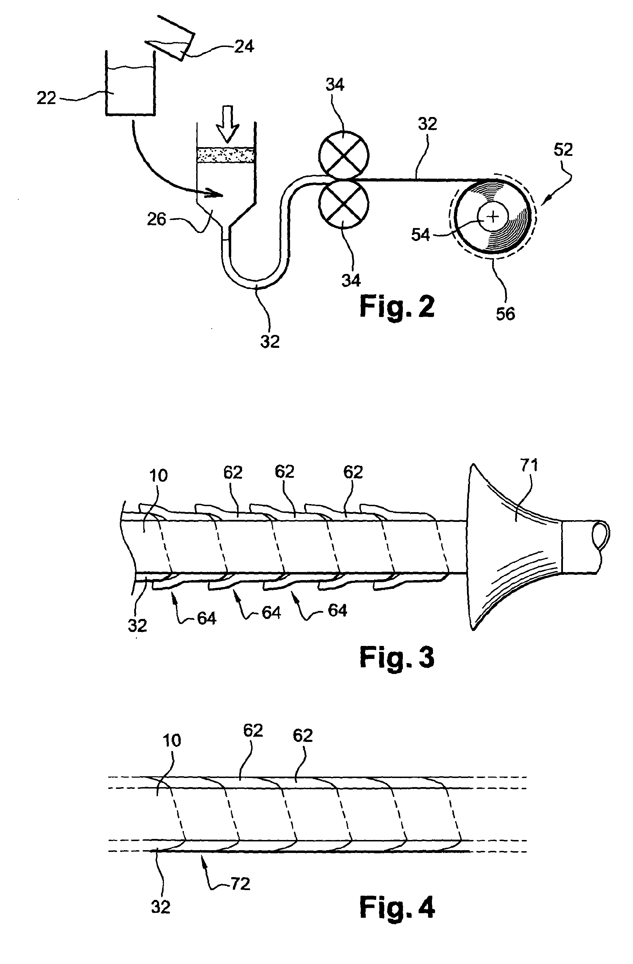

On a représenté sur la figure 1 les étapes d'un procédé de gainage d'un câble selon l'invention. Ce câble, généralement un câble électrique, est désigné sur les figures 3 et 4 par la référence 10.

Lors d'une première étape 20, on mélange une poudre 22 de matière plastique, généralement une poudre de PolyTetraFluoroEthylene (PTFE), à un lubrifiant 24, tel que celui commercialisé par EXXON sous la dénomination Isopar®. On obtient ainsi une matière synthétique 26 plastiquement déformable.

De préférence, cette matière synthétique 26 est compactée de manière à éliminer l'air qu'elle contient.

Lors d'une étape 30, on extrude la matière synthétique 26 précédemment obtenue de manière à former un ruban 32 plat.

De préférence, ce ruban 32 est ensuite soumis à une opération de calandrage entre deux cylindres 34 au cours d'une étape 40. Cette opération de calandrage est destinée à réduire l'épaisseur du ruban 32. Généralement, cette épaisseur du ruban 32 est comprise entre 30 et 500 µ*m*.

On passe ensuite à une étape 50 de conditionnement du ruban 32 dans des moyens de conditionnement 52 en attente d'utilisation pour le gainage.

Les moyens de conditionnement 52 comportent un rouleau de conditionnement 54 autour duquel le ruban 32 est enroulé.

Les moyens de conditionnement 52 comportent également des moyens de conservation 56 dans lesquels le ruban 32 est emballé. Ces moyens de conservation 56 sont destinés à limiter l'évaporation du lubrifiant contenu dans le ruban 32. Ces moyens de conservation sont par exemple des sacs en plastique fermés hermétiquement.

On notera que, grâce aux moyens de conservation 56, le ruban 32 peut être stocké en gardant des propriétés relativement stables, grâce au maintien dans la matière synthétique dont il est constitué d'une quantité d'au moins 50%, de préférence au moins 70%, du lubrifiant présent dans le mélange initial.

Lors d'une étape 60, on récupère le ruban 32 pour l'enrouler autour du câble 10 de manière à former une gaine isolante continue le long du câble 10. A cet effet, le ruban 32 est enroulé autour du câble 10 en formant des spires 62 qui se chevauchent entre elles, comme cela est représenté sur la figure 3.

Les chevauchements des spires 62 forment des surépaisseurs 64.

Lors d'une étape 70, on fait passer le câble 10 enrubanné dans une filière 71 de manière à éliminer les surépaisseurs 64.

En effet, la matière synthétique 26 formant le ruban 32 étant plastiquement déformable, grâce au lubrifiant dont elle est imbibée, elle se déforme plastiquement lors du passage dans la filière 71 de manière à réduire de moitié son épaisseur aux endroits correspondant aux surépaisseurs 64, afin que ces endroits soient nivelés avec le reste de la matière synthétique. On forme ainsi, en sortie de filière 71, une gaine lisse 72 telle que représentée sur la figure 4.

Une fois la gaine lisse 72 formée, on passe à une étape 80 au cours de laquelle on élimine le lubrifiant de la matière synthétique, de façon connue en soi, par exemple par chauffage ou à l'aide d'un solvant.

Cette étape d'élimination du lubrifiant est nécessaire en prévision d'une étape 90 de cuisson du câble 10 gainé. Dans le cas contraire, ce lubrifiant pourrait libérer des gaz inflammables lors de la cuisson.

La cuisson du câble 10 gainé est réalisée à une température supérieure à la température de frittage de la matière synthétique afin d'assurer la cohésion de la gaine lisse 72.

Ainsi, grâce au procédé selon l'invention, on obtient un câble entouré d'une gaine ne présentant pas de surépaisseurs qui nuiraient à son aspect esthétique général.

On notera enfin que l'invention n'est pas limitée au mode de réalisation précédemment décrit.

En effet, en variante, la matière synthétique pourrait être rendue plastiquement déformable lors de l'étape de passage du câble enrubanné dans la filière par une autre méthode que la conservation du lubrifiant dans cette matière synthétique.

## Revendications

1. Procédé de gainage d'un câble (10), dans lequel un ruban (32) en matière synthétique est enroulé autour du câble (10) avec chevauchement de spires (62) de façon à former une gaine (72) continue, **caractérisé en ce qu'**on utilise un ruban (32) en une matière synthétique (26) plastiquement déformable **et en ce qu**'après l'enroulement du ruban (32) autour du câble (10), on fait passer le câble (10) enrubanné dans une filière (71) de manière à éliminer des surépaisseurs (64) dues au chevauchement des spires (62).

2. Procédé de gainage d'un câble (10) selon la revendication 1, dans lequel la matière synthétique plastiquement déformable est un matériau qui, une fois extrudé en ruban d'épaisseur comprise entre 25 et 600 µm, puis enrubanné sur le câble, peut être écrasé à froid sans se rompre pour réduire son épaisseur de moitié par endroits.

3. Procédé de gainage d'un câble (10) selon la revendication 1 ou 2, dans lequel la matière synthétique (26) plastiquement déformable est obtenue par mélange d'une poudre (22) de matière plastique et d'un lubrifiant (24).

4. Procédé de gainage d'un câble (10) selon la revendication 3, dans lequel la poudre (22) de matière plastique est de la poudre de PolyTetraFluoroEthylene (PTFE).

5. Procédé de gainage d'un câble (10) selon la revendication 3 ou 4, dans lequel la matière synthétique (26) plastiquement déformable contient au moins 50% de la quantité de lubrifiant présente dans le mélange initial, de préférence 70%.

6. Procédé de gainage d'un câble (10) selon l'une quelconque des revendications 1 à 5, comprenant une étape (30) de formation du ruban (32) par extrusion de la matière synthétique (26) plastiquement déformable.

7. Procédé de gainage d'un câble (10) selon la revendication 6, comportant une étape (40) de réduction de l'épaisseur du ruban (32) par calandrage de ce ruban (32).

8. Procédé de gainage d'un câble (10) selon l'une quelconque des revendications 3 à 7, comportant une étape (50) de conditionnement du ruban (32) en attente d'utilisation pour son enroulement autour du câble (10), au cours de laquelle le ruban (32) de matière synthétique plastiquement déformable est emballé dans des moyens (56) de conservation destinés à limiter l'évaporation du lubrifiant.

9. Procédé de gainage d'un câble (10) selon l'une quelconque des revendications 3 à 8, comportant une étape (80) d'évaporation du lubrifiant contenu par la matière synthétique, faisant suite à l'étape (70) de passage du câble (10) enrubanné dans la filière (71).

10. Ruban (32) en matière synthétique pour le gainage d'un câble (10) par la mise en oeuvre d'un procédé de gainage selon l'une quelconque des revendications 1 à 9, **caractérisé en ce qu'**il est en matière synthétique plastiquement déformable, et **en ce qu'**il est conditionné par des moyens de conditionnement (52) comportant des moyens (56) destinés à limiter l'évaporation d'un lubrifiant contenu par le ruban (32).

11. Ruban (32) selon la revendication 10, contenant au moins 50% de la quantité de lubrifiant présente lors de la formation de ce ruban (32), de préférence 70%

## Claims

1. A method of sheathing a cable (10) in which a tape (32) of synthetic material is wound around the cable (10) with turns (62) that overlap so as to form a continuous sheath (72), the method being **characterized in that** a tape (32) is used that is made of a plastically-deformable synthetic material (26), and **in that** after the tape (32) has been wound around the cable (10), the taped cable (10) is passed through a die (71) so as to eliminate the regions (64) of extra thickness due to the overlapping turns (62).

2. A method of sheathing a cable (10) according to claim 1, in which the plastically-deformable synthetic material is a material that, once extruded to form a ribbon of thickness lying in the range 25 µm to 600 µm, and then wound on the cable, can be flattened while cold without breaking sufficiently to enable its thickness to be reduced to half in places.

3. A method of sheathing a cable (10) according to claim 1 or claim 2, in which the plastically-deformable synthetic material (26) is obtained by mixing a powder (22) of a plastics material with a lubricant (24).

4. A method of sheathing a cable (10) according to claim 3, in which the powder (22) of plastic material is polytetrafluoroethylene (PTFE) powder.

5. A method of sheathing a cable (10) according to claim 3 or claim 4, in which the plastically-deformable synthetic material (26) contains at least 50% of the quantity of lubricant that was present in the initial mixture, and preferably 70%.

6. A method of sheathing a cable (10) according to any one of claims 1 to 5, including a step (30) of forming the tape (32) by extruding the plastically-deformable synthetic material (26).

7. A method of sheathing a cable (10) according to claim 6, including a step (40) of reducing the thickness of the tape (32) by calendaring the tape (32).

8. A method of sheathing a cable (10) according to any one of claims 3 to 7, including a step (50) of packaging the tape (32) prior to utilization for winding around the cable (10), during which the tape (32) of plastically-deformable synthetic material is packaged in conservation means (56) for limiting evaporation of the lubricant.

9. A method of sheathing a cable (10) according to any one of claims 3 to 8, including a step (80) of evaporating off the lubricant contained in the synthetic material, said step following the step (70) of passing the taped cable (10) through the die (71).

10. A tape (32) of synthetic material for sheathing a cable (10) by implementing a sheathing method according to any one of claims 1 to 9, the tape being **characterized in that** it is made of plastically-deformable synthetic material, and **in that** it is packaged by packaging means (52) comprising means (56) for limiting evaporation of a solvent contained in the tape (32).

11. A tape (32) according to claim 10, containing at least 50% of the quantity of lubricant present during formation of the tape (32), and preferably 70%.

## Patentansprüche

1. Verfahren zur Ummantelung eines Kabels (10), wobei ein Streifen (32) aus einem synthetischen Material um das Kabel (10) gewickelt wird und sich dabei die Windungen (62) derart überlappen, dass ein durchgehender Mantel (72) gebildet wird, **dadurch gekennzeichnet, dass** ein Streifen (32) aus einem synthetischen Material (26) verwendet wird, das plastisch verformbar ist, und dass nach dem Wickeln des Streifens (32) um das Kabel (10) das umwickelte Kabel (10) durch eine Düse (71) geführt wird, um von den Überlappungen der Wicklungen (62) verursachte übermäßige Verdickungen (64) zu beseitigen.

2. Verfahren zur Ummantelung eines Kabels (10) nach Anspruch 1, wobei das synthetische, plastisch verformbare Material ein Material ist, das nach dem Extrudieren zu einem Streifen mit einer Dicke zwischen 25 und 600 µm und dem Wickeln um das Kabel kalt gestaucht werden kann, ohne dabei beschädigt zu werden, um seine Dicke stellenweise um die Hälfte zu reduzieren.

3. Verfahren zur Ummantelung eines Kabels (10) nach Anspruch 1 oder 2, wobei das synthetische, plastisch verformbare Material (26) durch Mischen eines Pulvers (22) aus Plastikmaterial mit einem Schmiermittel (24) erhalten wird.

4. Verfahren zur Ummantelung eines Kabels (10) nach Anspruch 3, wobei das Pulver (22) aus Plastikmaterial Pulver aus Polytetrafluorethylen (PTFE) ist.

5. Verfahren zur Ummantelung eines Kabels (10) nach Anspruch 3 oder 4, wobei das synthetische, plastisch verformbare Material (26) mindestens 50 % der Menge an Schmiermittel, die im Anfangsgemisch gegenwärtig ist, vorzugsweise 70 %, enthält.

6. Verfahren zur Ummantelung eines Kabels (10) nach einem der Ansprüche 1 bis 5, umfassend einen Schritt (30) des Ausbildens des Streifens (32) durch Extrudieren des synthetischen, plastisch verformbaren Materials (26).

7. Verfahren zur Ummantelung eines Kabels (10) nach Anspruch 6, umfassend einen Schritt (40) des Reduzierens der Dicke des Streifens (32) durch Kalandern des Streifens (32).

8. Verfahren zur Ummantelung eines Kabels (10) nach einem der Ansprüche 3 bis 7, umfassend einen Schritt (50) des Behandelns des Streifens (32) vor seiner Verwendung zur Umwicklung des Kabels (10), bei dem der Streifen (32) aus synthetischem, plastisch verformbaren Material in Mitteln (56) zur Konservierung eingehüllt wird, die dazu vorgesehen sind, die Verdunstung des Schmiermittels einzuschränken.

9. Verfahren zur Ummantelung eines Kabels (10) nach einem der Ansprüche 3 bis 8, umfassend einen Schritt (80) des Verdunstens des Schmiermittels, das im synthetischen Material enthalten ist, nach dem Schritt (70) des Führens des umwickelten Kabels (10) durch die Düse (71).

10. Streifen (32) aus einem synthetischen Material zur Ummantelung eines Kabels (10) durch die Anwendung eines Verfahrens zur Ummantelung nach einem der Ansprüche 1 bis 9, **dadurch gekennzeichnet, dass** er aus einem synthetischen Material hergestellt ist, das plastisch verformbar ist, und dass er mit Behandlungsmitteln (52) behandelt ist, die Mittel (56) aufweisen, die dazu vorgesehen sind, die Verdunstung eines Schmiermittels, das im Streifen (32) enthalten ist, einzuschränken.

11. Streifen (32) nach Anspruch 10, der mindestens 50 % der Menge an Schmiermittel, die bei der Formulierung des Streifens (32) gegenwärtig ist, vorzugsweise 70 %, enthält.
